(19) Europäisches Patentamt / European Patent Office / Office européen des brevets

(11) EP 2 933 356 A1

(12) **EUROPEAN PATENT APPLICATION**

(43) Date of publication:
**21.10.2015 Bulletin 2015/43**

(51) Int Cl.:
***C25B 1/00*** *(2006.01)*

(21) Application number: **14165214.9**

(22) Date of filing: **17.04.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicants:
- **BASF SE**
  **67056 Ludwigshafen (DE)**
- **Max-Planck-Gesellschaft zur Förderung der Wissenschaften e.V.**
  **80539 München (DE)**

(72) Inventors:
- **VENKATARAMAN, Shyam Sundar**
  **67061 Ludwigshafen (DE)**
- **KURKINA, Tetiana**
  **67433 Neustadt an der Weinstrasse (DE)**
- **NATHAN-WALLESER, Teressa**
  **79189 Bad Krozingen (DE)**
- **PARVEZ, Khaled**
  **68161 Mannheim (DE)**
- **FENG, Xinliang**
  **01309 Dresden (DE)**
- **MUELLEN, Klaus**
  **50939 Köln (DE)**

(74) Representative: **Haggenmüller, Christian**
**Maiwald Patentanwalts GmbH**
**Elisenhof**
**Elisenstraße 3**
**80335 München (DE)**

(54) **Two-dimensional carbon materials prepared by electrochemical exfoliation**

(57) The present invention relates to a process for preparing graphene by electrochemical exfoliation, which comprises:
- providing a first electrode E1 and a second electrode E2, wherein at least the first electrode E1 comprises a carbon starting material having a layered structure;
- bringing at least the first electrode E1 in contact with a liquid electrolyte, wherein the liquid electrolyte comprises a salt which
- is a salt of a sulfonic acid or a salt of a sulphuric acid monoester, and
- is an ionic liquid;

- applying an electric potential between the first electrode E1 and the second electrode E2 so as to exfoliate graphene from the carbon starting material.

EP 2 933 356 A1

## Description

The present invention relates to electrochemically exfoliated graphene and its use for manufacturing electronic, optoelectronic, energy-storing or energy-transforming devices.

Graphene, a two-dimensional (2D) honeycomb $sp^2$ carbon lattice, has received extensive attention due to its unique chemical, mechanical and electrical properties. These properties make it a promising material for next-generation nanoelectronics, composite materials, sensors, batteries, electrochemical capacitors etc. However, the large-scale production of high quality, solution processable graphene *via* a simple low-cost method remains a major challenge.

Several methods have been developed to produce graphene since its discovery. Among them, mechanically exfoliated and epitaxially grown graphene exhibit high quality but only produce a limited quantity of materials for fundamental research. Chemical vapor deposition (CVD) methods using catalytic metal substrates such as Ni or Cu, has the capability to produce large area graphene. These preparation methods are described e.g. in Science 306, 666-669 (2004). However, requirements of high temperature, a sacrificial metal and multi-step transfer processes onto desired substrates, are the biggest obstacles for cost effective industrial-scale production of CVD grown graphene.

Chemical exfoliation of graphite based on Hummers method provides an alternative to produce solution dispersible graphene oxide (GO) and is described e.g. in Nat Nanotechnol 3, 270-274 (2008). However, this method requires thermal or chemical reduction and electronic properties can only be partially restored.

Other methods have been developed to overcome these limitations and to obtain high quality graphene such as, solvent and/or surfactant assisted liquid-phase exfoliation (as described e.g. in NatNanotechnol3, 563-568 (2008)), electrochemical expansion (as described e.g. in J Am Chem Soc 133, 8888-8891 (2011)), and formation of graphite intercalated compounds (as described e.g. in Nat Nanotechnol 6, 439-445 (2011)). Nevertheless, these methods require extensive sonication which is limiting the size and yield of thin graphene layers.

Recently, electrochemical exfoliation of graphite has attracted attention as a simple and efficient way to produce graphene.

Adv Funct Mater 18, 1518-1525 (2008) describes the preparation of graphene by electrochemical exfoliation in an electrolyte containing ionic liquids.

US 2013/0001089 describes the preparation of graphene by electrochemical exfoliation using a carbon-based electrode and an aqueous electrolyte which may contain an acid such as $H_2SO_4$. Optionally, a base such as KOH and NaOH can be added.

It is an object of the present invention to prepare graphene by a process which is economically efficient and provides high quality graphene which is suitable for preparing electronic, optoelectronic or energy-storing or energy-transforming devices.

According to a first aspect of the present invention, the problem is solved by a process for preparing graphene by electrochemical exfoliation, which comprises:

- providing a first electrode E1 and a second electrode E2, wherein at least the first electrode E1 comprises a carbon starting material having a layered structure;
- bringing at least the first electrode E1 in contact with a liquid electrolyte, wherein the liquid electrolyte comprises a salt which
    - is a salt of a sulfonic acid (in the following also referred to as a sulfonate salt) or a salt of a sulphuric acid monoester (in the following also referred to as a monoester sulphate salt), and
    - is an ionic liquid;
- applying an electric potential between the first electrode E1 and the second electrode E2 so as to exfoliate graphene from the carbon starting material.

In the present invention, it has been realized that graphene of low defect density can be electrochemically exfoliated at high rate from a starting carbon material when using an electrolyte which comprises an ionic liquid having a sulfonate or monoester sulphate anion. The graphene prepared by the process shows high dispersion stability in suitable solvents. Furthermore, electrochemical capacitors having electrodes made of the electrochemically exfoliated graphene show surprisingly low RC time constants and are therefore suitable for high frequency applications such as AC line filtering. Also the graphene from this process can be used as a primer or a conductive layer to coat on current collectors such as Cu or Al for lithium ion battery electrode fabrication.

The term "ionic liquid" is used according to its commonly accepted meaning and therefore relates to a salt which has a low melting temperature, typically less than 100°C or even less than 60°C. Ionic liquids having sulfonate anions or monoester sulphate anions are generally known to the skilled person and commercially available or obtainable by standard preparation methods. Accordingly, appropriate cations which form an ionic liquid with a sulfonate or monoester sulphate anion are generally known to the skilled person. Exemplary cations will be discussed below in further detail.

The sulfonate salt according to the first aspect of the present invention can have the following formula (III)

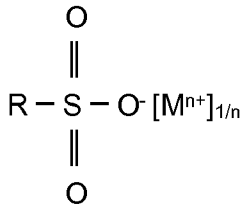

(III)

wherein
R is an organic residue, e.g. a substituted or unsubstituted alkyl group or a substituted or unsubstituted aryl group, more preferably a substituted or unsubstituted $C_{1-4}$ alkyl group, and
M is a cation, and n is the valency of the cation (typically, n is 1, 2 or 3).

The monoester sulfate salt according to the first aspect of the present invention can have the following formula (IV)

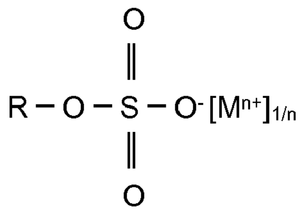

(IV)

wherein
R is an organic residue, e.g. a substituted or unsubstituted alkyl group or a substituted or unsubstituted aryl group, more preferably a substituted or unsubstituted $C_{1-4}$ alkyl group, and
M is a cation, and n is the valency of the cation (typically, n is 1, 2 or 3).

According to a second aspect of the present invention, the problem is solved by a process for preparing graphene by electrochemical exfoliation, which comprises:

- providing a first electrode E1 and a second electrode E2, wherein at least the first electrode E1 comprises a carbon starting material having a layered structure;
- bringing at least the first electrode E1 in contact with a liquid electrolyte, wherein the liquid electrolyte comprises a sulfonic acid of formula (I) or a salt thereof, and/or a sulphuric acid monoester of formula (II) or a salt thereof:

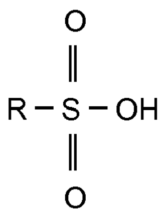

(I)

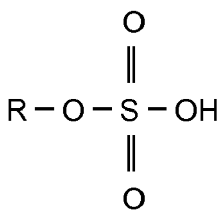

(II)

wherein in each of the formulas (I) and (II)
R is methyl, ethyl, propyl, or butyl;
- applying an electric potential between the first electrode E1 and the second electrode E2 so as to exfoliate graphene

from the carbon starting material.

In the present invention, it has been realized that a layered carbon starting material (such as graphite) can be electrochemically exfoliated at a very high rate if the electrolyte of the electrochemical cell contains a lower alkyl sulfonic acid or a lower alkyl monoester of sulphuric acid as defined above or a salt thereof. Furthermore, although exfoliated at high rate, the graphene material has a high content of "1-3 layer graphene"; and graphene films prepared therefrom have a low sheet resistance. Electrochemical capacitors having electrodes made of the electrochemically exfoliated graphene show surprisingly low RC time constants and are therefore suitable for high frequency applications such as AC line filtering. Also the graphene from this process can be used as a primer or a conductive layer to coat on current collectors such as Cu or Al for lithium ion battery electrode fabrication.

If the liquid electrolyte contains a salt of the sulfonic acid of formula (I) or a salt of the sulphuric acid monoester of formula (II), any salt commonly known to the skilled person can be used. Organic as well as inorganic cations can be used. Exemplary cations include ammonium cations, alkali metal cations (e.g. $Na^+$, $K^+$), alkaline earth metal cations (e.g. $Mg^{2+}$, $Ca^{2+}$, $Sr^{2+}$, $Ba^{2+}$), and transition metal cations.

The ammonium cation can have the following formula

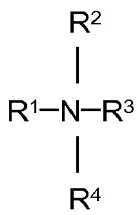

wherein $R^1$, $R^2$, $R^3$ and $R^4$, independently from each other are hydrogen or $C_{1-4}$ alkyl.

It is also possible that the ammonium cation is derived from a polyamine, e.g. a diamine (such as an ethylene diamine or a propylene diamine), by protonation and/or alkylation.

It is also possible that the salt of the sulfonic acid of formula (I) or the sulphuric acid monoester of formula (II) is an ionic liquid. As already indicated above, in the present invention, the term "ionic liquid" is used according to its commonly accepted meaning and therefore relates to a salt which has a low melting temperature, typically less than 100°C or even less than 60°C. Ionic liquids having sulfonate anions or monoester sulphate anions are generally known to the skilled person and commercially available or obtainable by standard preparation methods. Accordingly, appropriate cations which form an ionic liquid with a sulfonate or monoester sulphate anion are generally known to the skilled person. Exemplary cations will be discussed below in further detail.

Unless indicated otherwise, the following statements apply to the process according to the first aspect and the second aspect of the present invention.

In the present application, the term "graphene" is not limited to a single layer graphene but also encompasses a few-layer graphene having e.g. up to twenty graphene layers.

As indicated above, the first electrode E1 comprises a carbon starting material having a layered structure. Appropriate carbon materials from which graphene can be exfoliated are commonly known to the skilled person.

The carbon starting material having a layered structure can be e.g. a graphite, a chemically modified graphite such as a graphite oxide, an intercalated graphite, or a mixture thereof.

The graphite can be a natural graphite or a synthetic graphite. Exemplary graphite materials include a highly oriented pyrolytic graphite (HOPG), an expanded graphite, an intercalated graphite, or any combination thereof. For avoiding a subsequent reduction treatment, it can be preferred that the first electrode E1 does not contain a graphite oxide. It may also be preferred that both the first electrode E1 and the second electrode E2 do not contain a graphite oxide.

The carbon starting material, preferably graphite, can be provided in any form which is consistent with its use as an electrode material, e.g. in the form of flakes, a powder, fibers, foils, rods, a paste, or any combination thereof. An exemplary graphite foil can be made of e.g. thermally expanded graphite pressed into thin sheets. As generally known, thermally expanded graphite can be produced from natural graphite flakes via intercalation.

The electrode E1 can be e.g. a single graphite flake or many flakes held together. In the latter case, the flakes can be placed on a conductive surface, physically pressed together or held together using a binder such as a pyrolysed polymer (e.g. an extruded graphite rod).

Preferably, the carbon starting material having a layered structure is graphite in the form of a foil or rod.

The electrode E2 can be made of any material commonly known as an electrode material. The electrode E2 can be made of e.g. a metal such as Pt, Au, a conductive carbon material, ... etc. In principle, it is possible that the second electrode E2 also comprises a carbon material having a layered structure such as graphite or modified graphite.

As indicated above, at least the first electrode E1 is brought into contact with a liquid electrolyte, e.g. by

immersing, either partly or completely, the electrode E1 in the liquid electrolyte.

Optionally, the second electrode E2 may also be brought into contact with the same liquid electrolyte, e.g. by immersing, either partly or completely, the electrode E2 in the liquid electrolyte. If so, both electrodes E1 and E2 are in contact with the same electrolyte.

Preferably, the liquid electrolyte is an aqueous electrolyte. In principle, the aqueous electrolyte may additionally comprise a polar solvent such as an alcohol. However, it is preferred that water represents the major part among the solvents being present in the electrolyte (e.g. more than 50 vol% or more than 75 vol%, based on the total volume of the solvents being present in the electrolyte).

If the electrolyte comprises a salt which is an ionic liquid, it is possible that at least 80 wt% or at least 90 wt% of the liquid electrolyte are made of the ionic liquid. The liquid electrolyte may even consist of the ionic liquid. The process is then operated at a temperature above the melting temperature of the ionic liquid. However, in a preferred embodiment, the liquid electrolyte contains one or more solvents, preferably water (i.e. an aqueous electrolyte), and the ionic liquid is dissolved or dispersed in the solvent(s).

In principle, pH of the liquid (preferably aqueous) electrolyte can vary over a broad range. The liquid electrolyte can be acidic, i.e. pH is less than 7 or less than 5 or even less than 3. Alternatively, the liquid electrolyte can be alkaline, i.e. pH is higher than 7 or higher than 8 or even higher than 9. According to a further alternative, the liquid electrolyte can have a pH of $7\pm2$ (i.e. 5 to 9) or $7\pm1$ (i.e. 6 to 8).

As already mentioned above, cations M which may form an ionic liquid together with a sulfonate or monoester sulphate anion are generally known to the skilled person.

If the liquid electrolyte comprises a salt which is an ionic liquid, the cation M can be selected from e.g. a heterocyclic cation, an ammonium cation, or a phosphonium cation.

The heterocyclic cation can be aromatic or non-aromatic. The one or more heteroatoms being present in the ring of the heterocyclic cation can be e.g. nitrogen, oxygen, or sulphur.

Exemplary heterocyclic nitrogen-containing cations include e.g. an imidazolium cation, a pyridinium cation, a pyrrolidinium cation, a pyrazolium cation, a pyridazinium cation, a pyrimidinium cation, a pyrazinium cation, an oxazolium cation, a triazolium cation, a thiazolium cation, a piperidinium cation, a quinolium cation, an isoquinolium cation, a benzimidazolium cation.

If the salt which is present in the liquid electrolyte is an imidazolium cation, it can have the following formula:

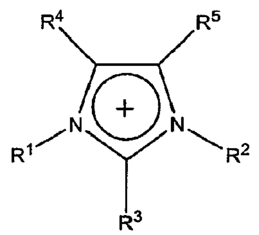

wherein the residues $R^1$ to $R^5$ are, independently from each other, selected from hydrogen, a substituted or unsubstituted $C_{1-12}$ alkyl group, a substituted or unsubstituted $C_{1-6}$ alkoxy group, or hydroxy. In case of a substituted alkyl or alkoxy group, one or more of the hydrogen atoms of the alkyl or alkoxy group can be substituted e.g. by -OH or-CN.

In a preferred embodiment, $R^1$ is a $C_{1-12}$ alkyl, more preferably a $C_{1-6}$ alkyl or a $C_{1-4}$ alkyl, $R^2$ is a $C_{1-4}$ alkyl, more preferably a $C_{1-2}$ alkyl, $R^3$ is hydrogen or a $C_{1-2}$ alkyl, $R^4$ is hydrogen, and $R^5$ is hydrogen.

The ammonium cation can have the following formula

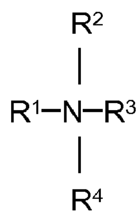

wherein $R^1$, $R^2$, $R^3$ and $R^4$, independently from each other, are hydrogen or $C_{1-4}$ alkyl.

It is also possible that the ammonium cation is derived from a polyamine, e.g. a diamine (such as ethylene diamine or propylene diamine) or a triamine, by protonation and/or alkylation.

The concentration of the sulfonic acid of formula (I) or a salt thereof, or the sulphuric acid monoester of formula (II) or a salt thereof according to the second aspect of the present invention, and the salt according to the first aspect of

the present invention in the liquid electrolyte can vary over a broad range.

If a sulfonic acid of formula (I) or a salt thereof, which is not an ionic liquid, is present in the liquid electrolyte, its concentration can be e.g. within the range of from 0.05 wt% to 20 wt%, more preferably from 0.1 wt% to 10 wt% or from 0.5 wt% to 7 wt%.

If a sulphuric acid monoester of formula (II) or a salt thereof, which is not an ionic liquid, is present in the liquid electrolyte, its concentration can be e.g. within the range of from 0.05 wt% to 20 wt%, more preferably from 0.1 wt% to 10 wt% or from 0.5 wt% to 7 wt%.

If the liquid (preferably aqueous) electrolyte comprises a salt which is an ionic liquid, either according to the first aspect or the second aspect of the present invention, the salt can be present in a concentration of from 0.1 wt% to 80 wt%, more preferably 1.0 wt% to 50 wt%, even more preferably 1.5 wt% to 35 wt%.

Alternatively, if an ionic liquid is used, the liquid electrolyte may even consist of the sulfonate or monoester sulphate salt.

These concentration values may refer to the concentration at the beginning of the electrochemical exfoliation process and may change during the process. It is also possible that the concentration is within the ranges indicated above until completion of the electrochemical exfoliation process, if necessary by adding further sulfonic acid of formula (I) or sulphuric acid monoester of formula (II) or sulfonate or monoester sulphate salts during the process.

The liquid (preferably aqueous) electrolyte can be obtained by at least partly dissolving the sulfonic acid of formula (I) or the sulphuric acid monoester of formula (II) or the sulfonate or monoester sulphate salt in a solvent, preferably in water. The liquid (preferably aqueous) electrolyte can also be obtained by adding to a solvent, preferably water, the acid which provides upon deprotonation the anion and a basic compound which provides upon protonation the cation. The acid and the basic compound can be added simultaneously or one after the other (e.g. the basic compound first and then the acid, or *vice versa*).

The liquid electrolyte may contain one or more additives such as a surfactant, a dispersant, an oxidant, a buffering agent, or any mixture thereof. Alternatively, it is possible that the liquid electrolyte does not contain one or more of these additives, e.g. does not contain a surfactant and/or a dispersant.

For further improving dispersion stability of the graphene in the liquid electrolyte, an aryl sulfonic acid condensation product, more preferably a naphthalene sulfonic acid condensation product can be present in the liquid electrolyte. If present, it is preferably a condensation product of an aryl sulfonic acid, in particular a naphthalene sulfonic acid, or a salt thereof with an aldehyde, in particular formaldehyde. Such condensation products are commercially available.

If present, one or more of these additives may already be added at the beginning of the electrochemical exfoliation process or may alternatively be added at a later stage (i.e. when the electrochemical exfoliation of graphene has already started or even after completion of the electrochemical exfoliation of graphene). So, in principle, it is also possible in the process of the present invention that the liquid electrolyte does not contain a dispersant and/or a surfactant when the electrochemical exfoliation process is started, and a dispersant and/or a surfactant is/are added to the liquid electrolyte during the electrochemical exfoliation of graphene and/or after completion of the electrochemical exfoliation of graphene (e.g. for stabilizing the exfoliated graphene layers).

If present, the surfactant can be a non-ionic, an anionic or a cationic surfactant. Appropriate dispersants are commonly known to the skilled person.

As indicated above, an electric potential is applied between the first electrode E1 and the second electrode E2 so as to exfoliate the graphene from the carbon starting material.

Based on common general knowledge, the skilled person is able to select an electric potential which is high enough for initiating exfoliation and thereby separating graphene layers from the carbon starting material.

Whether or not exfoliation has been initiated can be verified e.g. by detecting morphological changes in the electrode E1 and/or detecting graphene which has been exfoliated from the electrode E1 into the liquid electrolyte.

The electric potential applied between the first electrode E1 and the second electrode E2 can vary over a broad range and is typically in the range of from 0.01 V to 200 V, more preferably 0.05 V to 20 V or 0.1 V to 15 V.

In principle, any power or voltage source commonly known to the skilled person can be used for applying the electric potential between the electrodes E1 and E2.

Preferably, the electric potential is high enough for at least temporarily generating a gas at the electrode E1 and/or the electrode E2. Whether or not a gas is generated at an electrode can easily be detected (e.g. formation of gas bubbles at the electrode surface).

It can be preferred to increase or adjust the electric potential to a value which is high enough for at least temporarily generating hydrogen gas and hydroxyl ions at the electrode E2.

As known to the skilled person, hydrogen gas and hydroxyl ions can be generated according to the following reaction scheme:

$$2\ H_2O + 2\ e^- \rightarrow H_2 + 2\ OH^-$$

Although being generated at the electrode E2, this may assist the intercalation of compounds into the layered carbon starting material at the electrode E1 and thereby improve efficiency of the exfoliation process.

Optionally, it can also be preferred to increase or adjust the electric potential to a value which is high enough for at least temporarily generating oxygen gas at the electrode E1. As known to the skilled person, oxygen gas can be generated according to the following reaction scheme:

$$2\ H_2O \rightarrow O_2 + 4H^+ + 4\ e^-$$

Generation of oxygen gas may improve separation of graphene layers from the layered carbon starting material which in turn improves efficiency of the exfoliation process.

During the electrochemical exfoliation, the polarity of the electric potential can be changed, either periodically or non-periodically. Alternatively, it is also possible that the polarity of the electric potential does not change during the electrochemical exfoliation.

Preferably, a positive voltage is applied to the first electrode E1 (i.e. E1 represents the anode), either temporarily or throughout the entire electrochemical exfoliation process. If the positive voltage is not applied throughout the entire electrochemical exfoliation process to the electrode E1, a positive voltage and a negative voltage can alternately be applied to the first electrode E1.

Preferably, the graphene exfoliated from the carbon starting material during the electrochemical exfoliation process (i.e. the exfoliated graphene) is separated from the liquid electrolyte.

The graphene can be separated from the liquid electrolyte by methods commonly known to the skilled person, such as filtration (e.g. vacuum filtration), centrifugation, sedimentation, sieving, or any combination thereof.

If needed, the graphene separated from the liquid electrolyte can be subjected to one or more additional treatment steps such as a thermal treatment (e.g. for drying, thermal annealing, ... etc.), chemical doping (e.g. by treatment with $HNO_3$, or gas species such as $N_2 + H_2$, $NH_3$, $SOCl_2$ etc.), freeze drying, chemical functionalization, chemical reduction or oxidation, microwave treatment, washing, or any combination thereof.

According to a further aspect, the present invention relates to the use of a liquid electrolyte comprising a salt which

- is a salt of a sulfonic acid or a salt of a sulphuric acid monoester, and
- is an ionic liquid;

for manufacturing graphene by electrochemical exfoliation.

With regard to the preferred properties of the salt of a sulfonic acid or a sulphuric acid monoester, reference can be made to the statements provided above.

According to a further aspect, the present invention provides a graphene which is obtainable or obtained by the process described above.

Typically, the exfoliated graphene obtainable by the process of the present invention is in the form of flakes. Preferably, at least 50%, more preferably at least 60% or at least 70% of the graphene flakes are made of at most three graphene layers (i.e. the majority of the graphene flakes are made of single- and bi- and tri-layer graphene). The relative amount of single-layer and bi- and tri-layer graphene flakes can be measured by atomic force microscopy (AFM). The percentage value is based on the number of flakes. So, among 100 graphene flakes, at least 50 flakes are typically made of a graphene having at most three layers.

Preferably, at least 60%, more preferably at least 70% of the graphene flakes have a size of at least 5 $\mu$m. Size of a graphene flake is measured by scanning electron microscopy (SEM) and relates to the largest dimension of the flake shown on the SEM image. The percentage value is based on the number of flakes. So, among 100 graphene flakes, at least 60 flakes are typically having a size of at least 5 $\mu$m.

The exfoliated graphene obtainable by the process of the present invention can have a carbon to oxygen atomic ratio of at least 8, more preferably at least 10, as determined by X-ray photoelectron spectroscopy; and/or can have an intensity ratio, based on peak height, of the D peak to the G peak (i.e. $I_D/I_G$) in the Raman spectrum of less than 1.0, more preferably less than 0.85 or even less than 0.75. The Raman spectrum is measured on a bulk sample (i.e. not on an individual flake) with a 514 nm excitation laser. The lower the $I_D/I_G$ ratio, the lower is the number of defects in the graphene material. So, with the process of the present invention, a graphene is obtainable which has a low number of defects and a low amount of oxidized carbon atoms.

According to a further aspect, the present invention relates to a process for preparing a graphene dispersion, which comprises:

- preparing graphene by the electrochemical exfoliation process as described above, and
- dispersing the graphene in a liquid dispersant medium.

With regard to the properties of the graphene, reference can be made to the statements provided above.

Appropriate liquids that can be used in a liquid dispersant medium are commonly known to the skilled person.

Preferably, the liquid dispersant medium comprises or consists of one or more organic liquids. An aqueous dispersant medium can be used as well.

Preferred organic liquids that can be mentioned are e.g. N,N'-dimethylformamide, N-methyl or ethyl pyrrolidone, alcohols (e.g. $C_{1-4}$ alcohols such as methanol, ethanol or propanol), tetrahydrofuran (THF), acetonitrile, dimethyl sulfoxide (DMSO), ketones, or any mixture thereof. These organic liquids can also be used together with water in a water/organic solvent mixture.

Optionally, the liquid dispersant medium may contain additives such as surfactants, binders, and/or dispersants. However, due to the high dispersion stability (i.e. low aggregation tendency), it is also possible that the graphene dispersion does not contain any surfactant and/or binder and/or dispersant.

For further improving dispersion stability of the graphene in the liquid dispersant medium, an aryl sulfonic acid condensation product, more preferably a naphthalene sulfonic acid condensation product can be present in the liquid dispersant medium. If present, it is preferably a condensation product of an aryl sulfonic acid, in particular a naphthalene sulfonic acid, or a salt thereof with an aldehyde, in particular formaldehyde. Such condensation products are commercially available.

For assisting the dispersion step, the graphene can be dispersed in the liquid dispersant medium under sonication, shaking, or stirring or combinations thereof. Appropriate sonication conditions and devices are commonly known to the skilled person.

The amount of graphene dispersed in the liquid dispersant medium can vary over a broad range. Typically, the liquid dispersant medium contains the graphene in an amount of from 0.001 wt% to 2.0 wt%, more preferably 0.01 wt% to 1.0 wt%.

According to a further aspect, the present invention relates to a graphene dispersion in a liquid dispersant medium, obtainable or obtained by the process described above.

According to a further aspect, the present invention relates to a process for manufacturing a device using the electrochemically exfoliated graphene described above. It also relates to the use of the electrochemically exfoliated graphene described above for manufacturing a device. Preferably, the device is an electronic device, an optoelectronic device, an energy-storing or-transforming device.

Based on his/her common general knowledge, the skilled person principally knows how the graphene which was prepared by electrochemical exfoliation as described above is to be assembled with other components so as to manufacture an electronic device, an optoelectronic device, or an energy-storing or -transforming device.

As exemplary devices, the following ones can be mentioned: An electrochemical capacitor or an AC line filter comprising such a capacitor, a battery such as a lithium-ion-battery, a fuel cell, or an electrolytic cell (e.g. for electrolysis).

In the present invention, it has also been realized that electrochemical capacitors having electrodes made of the electrochemically exfoliated graphene show surprisingly low RC time constants and are therefore suitable for high frequency AC line filtering or as conducting primer for lithium ion batteries.

So, in a preferred embodiment, the device is a capacitor for AC line filtering having at least one, more preferably at least two electrodes made of the electrochemically exfoliated graphene described above; or an AC line filter containing such a capacitor.

In another preferred embodiment, the device is a lithium ion battery. Preferably, the graphene is deposited on a current collector and is sandwiched between said current collector and an electrode (preferably the anode, more preferably a silicon-containing anode).

In another preferred embodiment, the device is a device containing an electrocatalyst (e.g. an electrolytic cell or a fuel cell) which is in contact with the electrochemically exfoliated graphene described above. The electrocatalyst can be one for an oxygen reduction reaction (ORR) and/or an oxygen evolution reaction (OER)). Such electrocatalysts are principally known to the skilled person.

The manufacturing methods of the devices mentioned above may include a step wherein the graphene or the graphene dispersion is applied onto a substrate by film-forming methods commonly known to the skilled person. Exemplary methods include e.g. Langmuir-Blodgett technique, dip-coating, spin-coating, printing, painting (e.g. brush painting), dry transfer technique (e.g. providing the graphene on a temporary substrate (e.g. by filtration) and then transferring the graphene to the substrate of the layered assembly), self-assembly on appropriate surfaces (e.g. SAM modified), dielectrophoresis, electrodeposition (e.g. for conductive substrates or electrodes), or any combination thereof.

Substrates on which graphene can be applied are known to the skilled person. In principle, any substrate which is compatible with graphene can be used. Preferably, the substrate should also be a material which is compatible with the intended final use such as electrochemical capacitor, lithium ion batteries and electrocatalytic applications. However, it is also possible to provide the graphene film on a temporary substrate first, and subsequently transferring the graphene film to a different substrate, which may then become part of the final device.

The substrate can be chosen from a broad variety of different materials. The substrate can be rigid but may

also be flexible (e.g. in the form of a foil). Appropriate substrates include e.g. metals (such as copper, platinum, nickel, titanium, and alloys thereof), semiconductors (such as silicon, in particular silicon wafers), inorganic substrates (such as oxides, e.g. $SiO_2$, glass, HOPG, mica, or any combination thereof), flexible substrates that may be made of e.g. polymers such as polyethylene terephthalate, polyethylene naphthalate, polymethyl methacrylate, polypropylene adipate, polyimide, polyolefins, or combinations or blends thereof. Metal and metal oxide nanoparticles (such as copper, NiO, $SnO_2$, $CoO_2$) can be mentioned as well.

The substrate can be porous or non-porous.

The substrate can be a flexible substrate such as a paper substrate, a polymer foil substrate, a metal foil substrate, or any mixture or combination thereof. For some applications, it might be preferred to have a flexible and porous substrate.

According to a further aspect, the present invention relates to a device comprising the electrochemically exfoliated graphene described above. Preferably, the device is an electronic device, an optoelectronic device, an energy-storing or -transforming device. As exemplary devices, the following ones can be mentioned: An electrochemical capacitor or an AC line filter comprising such a capacitor, a battery such as a lithium-ion-battery, a fuel cell, or an electrolytic cell (e.g. for electrolysis). With regard to preferred properties of these devices and the electrochemically exfoliated graphene being present in the devices, reference is made to the statements already provided above.

The present invention is illustrated in further detail by the following Examples.

**Examples**

**1. Electrochemical exfoliation of graphite in an aqueous electrolyte comprising methylsulfonic acid (MSA)**

Exfoliation

Natural graphite flakes (Sigma Aldrich) were used as carbon source (working electrode) for electrochemical exfoliation. The graphite flakes were adhered on a conductive carbon tape to form a pellet. A Pt wire was used as a counter electrode. The electrolyte was prepared by dissolving 1 and/or 5 wt% of methylsulfonic acid (MSA) in water. The distance between the graphite and Pt electrodes was 2 cm. The electrochemical exfoliation of graphite was carried out by applying positive voltage on the working electrode. The exfoliation voltage was determined by slowly increasing the voltage until the graphite electrode starts to exfoliate. The voltage was then kept constant until the exfoliation was completed. Thus a voltage of + 5.5 V and +4.5 V was determined to be efficient for exfoliation in 1 wt% and 5 wt% MSA electrolytes, respectively. In both systems the graphite electrode was completely exfoliated within 5 minutes (3-5 min). The exfoliated product was the collected with a polytetrafluoroethylene (PTFE) membrane filter (pore size 0.2 $\mu$m) and washed repeatedly with DI water by vacuum filtration. The filtrate was then dispersed in DMF by sonication at low power for 10 min. The dispersion was kept for 24 h for the precipitation of un-exfoliated graphite flakes and/or particles. The top part of the dispersion was used for further characterizations. The resultant graphene dispersion was stable for several weeks (> 4 weeks).

Characterization

The thickness and number of layers in the EG was determined by AFM. For this purpose, sheets of electrochemically exfoliated graphene were deposited on $SiO_2$ substrate by using Langmuir-Blodgett (LB) technique. For a typical experiment, the graphene dispersion in 1:3 DMF/$CHCl_3$ was added drop wise onto the water surface with a 100 $\mu$L glass syringe (total volume 3 mL). A faint black-colored film was observed on the water surface. Afterwards, the film was compressed by LB trough barriers while the surface pressure was monitored by a tensiometer. The layer of electrochemically exfoliated graphene was collected by vertically dip-coating the silicon substrates with 300 nm $SiO_2$ layer. The samples were annealed at 200°C for 30 min under vacuum to remove the residual solvents.

Tapping mode AFM (Dimension 3100CL) was used to measure the thickness of graphene flakes. Statistical thickness distribution is analyzed by measuring thickness of over 100 individual graphene flakes. Graphene flake size distribution was determined by SEM (Gemini 1530 LEO) measured over 250 individual graphene flakes. Raman spectra were recorded with a Bruker RFS 100/S spectrometer (laser wavelength 532 nm). The XPS measurements were obtained using a Scienta ESCA 200 spectrometer in an ultrahigh vacuum (base pressure 10-10 mbar). The measurement chamber is equipped with a monochromatic Al (K$\alpha$) x-ray source. The work function of graphene was measured by ultraviolet photoelectron spectra (ESCA 200 spectrometer) with a He discharge lamp providing 21.22 eV photon energy and applying a bias of -3 V to the sample. The work function was calculated using the equation $\Phi = hv - EF + E_{cutoff}$, where hv, EF, and $E_{cutoff}$ are the photon energy of the excitation light, the Fermi level edge, and the measured secondary electron cut-off, respectively. Both the XPS and ultraviolet photoelectron spectra measurements were carried out on -20 nm thick graphene film prepared on Au (30 nm)-coated $SiO_2$ substrates at room temperature. The sheet resistances of

graphene films were measured with a four-point probe system using a Keithly 2700 multimeter (probe spacing: 0.635 mm, $R_s$ = 4.532 V/I).

The Raman spectrum is shown in Figure 1 and provides the characteristic peaks for a few-layer-graphene (D-peak at around 1350 $cm^{-1}$, G-peak at 1579 $cm^{-1}$, 2D-peak at 2700 $cm^{-1}$).

The XPS spectrum of the electrochemically exfoliated graphene is shown in Figure 2. The graphene had an oxygen content of about 8%, and a carbon to oxygen atomic ratio of about 11.5.

The graphene thickness distribution (expressed as "number of graphene layers") is shown in Figure 3. There is a high percentage (more than 75 %) of graphene flakes made of "few-layer-graphene" having three or less graphene layers.

Graphene flake size distribution is shown in Figure 4. There is a high percentage (about 70%) of flakes having a flake size of at least 5 μm.

Thin film fabrication

Transparent graphene films on flexible polyethylene terephthalate (PET) substrates by a vacuum filtration and dry transfer method. Briefly, a graphene dispersion of - 0.4 mg/mL in DMF) was vacuum-filtered through a polytetrafluoroethylene (PTFE) membrane followed by mechanically pressing the filtered film against a PET substrate. Afterwards, the PTFE membrane was peeled off, leaving the transferred graphene film on the substrate. Vacuum filtration of 5 mL graphene dispersion resulted in a -45 nm thick film on PET with - 54% transmittance (at 550 nm). For the heat treatment, another graphene film with similar thickness was prepared on the glass substrate.

The sheet resistance (Rs) measured by a four-point probe system revealed a mean value of 8.2 kΩ/□ immediately after the transfer. Low temperature annealing (*i.e.*, 300°C) of the graphene films decreased the Rs to 0.59 kΩ/□.

Sheet resistance of the graphene film (without thermal annealing and with thermal annealing at 100°C, 200°C and 300°C) is shown in Figure 5. Even if there is no thermal annealing, a low sheet resistance of 8.2 kOhm/□ is achieved. By low-temperature annealing, sheet resistance can be further reduced to very low values (100°C: 3.5 kOhm/□; 200°C: 0.91 kOhm/□; 300°C: 0.59 kOhm/□).

**2. Electrochemical exfoliation of graphite in an aqueous electrolyte comprising a salt which is an ionic liquid**

*Materials, chemicals and instrumentation.* Graphite rods and graphite foil (Alfa Aesar,), 1-ethyl-3-methylimidazolium methanesulfonate (EMIM-MS), and 1-ethyl-3-methylimidazolium acetate (EMIM-Ac). BioLogic cycler and Gamry potentiostat were used to apply the required voltage and monitor the generated current.

The salts 1-ethyl-3-methylimidazolium methanesulfonate (EMIM-MS), and 1-ethyl-3-methylimidazolium acetate (EMIM-Ac) are ionic liquids (i.e. salts having a low melting temperature; m.p. (EMIM-MS): 35°C; m.p. (EMIM-Ac): < 20°C). Both are commercially available (e.g. Basionics, BASF SE).

An aqueous electrolyte was prepared by adding the salt into water. Different salt concentrations were tested. As electrodes, either graphite rods or graphite foils were used. Graphite foils were produced by pressing thermally expanded graphite into thin sheets, and thermally expanded graphite was produced from natural graphite flakes via intercalation.

Comparative Example: Aqueous electrolyte comprising 1-ethyl-3-methylimidazolium acetate (EMIM-Ac) as an ionic liquid

EMIM-Ac was tested at concentrations of 10 wt%, 25 wt%, 50 wt% and 80 wt% in water.

A voltage of 6 V was applied. Graphite rods were used as electrodes. In the electrochemical exfoliation process of all tests, the graphite cathode was corroded, whereas the graphite anode remained unaffected. The powdery material collected from the corroded cathode was not dispersing in N-ethylpyrrolidone, which means that no few-layer-graphene could be obtained in an electrolyte comprising EMIM-Ac.

Inventive Examples: Aqueous electrolyte comprising a sulfonate salt as an ionic liquid

1-Ethyl-3-methylimidazolium methanesulfonate (EMIM-MS) was tested at concentrations of 2 wt%, 5 wt%, 10 wt% and 20 wt% in water. The following voltages were applied for effecting exfoliation (i.e. exfoliation potential):

2 wt%: 10 V
5 wt%: 8 V
10 wt%: 6 V
20 wt%: 5 V

In all tests, anodic exfoliation was observed. After the electrochemical exfoliation process was over, the exfoliated material was separated from the electrolyte and thoroughly washed with water using vacuum filtration. The obtained powder was dispersed in N-ethyl-pyrrolidone (NEP) using bath sonication for 15 min. After that the dispersion was centrifuged 2600 rpm for 20 min and supernatant was used for further characterization and testing.

For AFM and Raman characterization the dispersion was drop-casted on $Si/SiO_2$, for TEM measurements - on carbon grids.

Raman measurements (using 514 nm laser) made on samples which had been electrochemically exfoliated from graphite rods showed typical characteristic peaks for a few-layer-graphene (D-peak at around 1350 $cm^{-1}$, G-peak at 1579 $cm^{-1}$, 2D-peak at 2700 $cm^{-1}$). This is shown in Figure 6. The average value of $I_D/I_G$ (i.e. ratio of intensities of the peaks D and G) obtained from three measurement points was calculated for every sample. For graphene produced in an electrolyte containing 2% EMIM-MS, $I_D/I_G$ was 0.78. Electrolyte containing 5% EMIM-MS: $I_D/I_G$ was 0.82. Electrolyte containing 10% EMIM-MS: $I_D/I_G$ was 0.67. Electrolyte containing 20% EMIM-MS: $I_D/I_G$ was 0.76.

A Raman measurement was also made on an individual graphene flake of a sample which had been electrochemically exfoliated from a graphite foil. This is shown in Figure 7. Again, the characteristic graphene peaks can be identified in the Raman spectrum. The $I_D/I_G$ ratio was 0.25.

To perform FTIR spectroscopy, a portion of the electrochemically exfoliated graphene (EEG) dispersion was dried on PTFE membrane. After drying, a thin pellet can be peeled off from the membrane and directly used for ATR-FTIR measurements. Alternatively, EEG-paper obtained using vacuum filtration of the dispersion through PTFE membrane was used. FTIR spectra of the EEG obtained using different concentrations of ionic liquid were identical. The ATR-FTIR spectrum of EEG was compared with commercially available graphene oxide ("Graphene Supermarket", USA). FTIR spectra and corresponding chemical groups are shown on Fig. 8. In the FTIR of the EEG, peaks corresponding to oxygen containing groups are either of much lower intensity or even completely absent, if compared to graphene oxide. In particular, O-H stretching mode (3400 $cm^{-1}$), C=O vibrational mode (1730 $cm^{-1}$), C-OH vibrational 1390 $cm^{-1}$, epoxy C-O-C (1060 $cm^{-1}$) peaks are of very low intensity or even absent in EEG.

The electrochemically exfoliated graphene of the present invention shows a high dispersion stability. For example, graphene flakes dispersed in NEP are stable at least for 2 months without any addition of surfactant.

### 3. Using the electrochemically exfoliated graphene for preparing electrochemical capacitors suitable for AC line filtering

For preparing an electrochemical capacitor, the graphene dispersion which had been obtained as described above by electrochemical exfoliation in the presence of 1-ethyl-3-methylimidazolium methanesulfonate (EMIM-MS) was used.

*Electrode preparation*

Electrodes were prepared using EEG (electrochemically exfoliated graphite), which was dispersed in NEP with the concentration of 1.5 mg/ml. It is a binderless technique where the as-prepared graphene ink is drop-coated directly on current collectors (CC).

Prior to coating, the current collectors (either nickel foam or nickel foil) were punched out into a 12 mm diameter circular disks. They were cleaned in a sonication bath with isopropanol for 10 minutes, vacuum dried at 70°C for 2 hours and then weighed individually. 2 -3 $\mu$l of EEG ink was dropped onto the nickel foam disks and vacuum dried at 70°C for 12 hours. This procedure was repeated for the second coating before drying it completely in the vaccum oven for another 24 hours at 70°C before electrochemical capacitor fabrication. The weight of the active material (EEG) was determined by subtracting bare nickel foam weight, taken prior to the drop coating, from the active material coated nickel foam or foil.

*Assembly and electrochemical characterizations* of *electrochemical capacitors*

Symmetric two-electrode electrochemical capacitors were assembled in a stainless steel electrochemical capacitor cell with titanium electrodes using microfiber glass separator of 20mm in between two EEG coated nickel foam or foil. All electrochemical measurements were carried out using 1 M of potassium hydroxide (KOH) as the electrolyte. The electrochemical impedance spectroscopy, cyclic voltammetry, and galvanostatic charge-discharge were measured using an electrochemical workstation Biologic Potentiostat/Galvanostat MPG2 and Gamry MultiEchem Potentiostat/Galvanostat/ZRA system at room temperature.

Example 1:

Graphene was prepared by electrochemical exfoliation of a graphite rod (alternatively: a graphite foil) in a 10

wt% aqueous solution of 1-ethyl-3-methylimidazolium methanesulfonate. The electrochemically exfoliated graphene was provided on a nickel foam (acting as a current collector) and the electrochemical capacitor was assembled following the procedure outlined above.

CV curves of the electrochemical capacitor obtained at different scan rates of 100, 500, 1000 and 2000 V $s^{-1}$ are shown in Figure 9. The results indicate a typical electric double-layer capacitive behavior even at ultrahigh scan rates, demonstrating its ultrahigh power ability. An ultra-fast charging/discharging capability of 2000 V/s is achieved.

Figure 10 shows the Nyquist plot. The inset is a magnified plot of the high frequency region, showing a vertical intersection with the axis. The half semi-circle is curve fitted using a standard model and the intersection of the curve on the Z-real axis is 0.3 Ω. Accordingly, a low ESR (equivalent series resistance) value of 0.3 Ω was determined.

At 120 Hz, a very low RC constant of 714 μs was obtained.

The RC time constant is determined from the following equation:

$$\tau_{frequency} = RC = Z' \left(1/(2\pi f Z'')\right)$$

wherein Z' is the resistive element, Z" is the capacitive element and *f* is the frequency corresponding to it.

Z' and Z" are determined from the Nyquist plot.

The relaxation time constant, $\tau_o$, which is taken at an -45° angle, where the real and the imaginary component have equal magnitude, is calculated using the formula below, where $f_o$ is the frequency at an -45° angle:

$$\tau_o = 1/(2\pi f_o)$$

A very low $\tau_o$ value of 66.3 μs (at $f_o$ of 2402 Hz) was obtained.

A Ragone plot is shown in Figure 11. As derivable from Figure 11, high power and energy density values are obtained. When using a graphite foil as a starting material for electrochemical exfoliation, a power density of up to 8720 kW/kg (corresponding to 540 w/$cm^3$) and an energy density of up to 16 Wh/kg (corresponding to 1 mWh/$cm^3$) were obtained. When using a graphite rod as a starting material for electrochemical exfoliation, a power density of up to 2952 kW/kg (corresponding to 550 w/$cm^3$) and an energy density of up to 10 Wh/kg (corresponding to 1.9 mWh/$cm^3$) were obtained.

The energy and power densities were determined using the equations below;

$$E = 0.5 \times C V^2 \qquad \text{(in } Wh\text{/kg)}$$

V: discharge voltage range (in volts)
C: discharge capacitance (in Farads)

$$P = E/t \qquad \text{(in } W\text{/kg)}$$

E: Energy density
t: discharge time (in seconds)

Example 2:

Graphene was prepared by electrochemical exfoliation of a graphite rod in a 2 wt% aqueous solution of 1-ethyl-3-methylimidazolium methanesulfonate.

The electrochemically exfoliated graphene was provided on a nickel foil (acting as a current collector) and the electrochemical capacitor was assembled following the procedure outlined above.

CV curves of the electrochemical capacitor obtained at different scan rates of 70 and 500 V $s^{-1}$ are shown in Figure 12. The results indicate a typical electric double-layer capacitive behavior even at ultrahigh scan rates, demonstrating its ultrahigh power ability. An ultra-fast charging/discharging capability of 500 V/s is achieved.

Figure 13 shows the Nyquist plot. The inset is a magnified plot of the high frequency region, showing a vertical intersection with the axis. A low ESR (equivalent series resistance) value of about 0.3 Ω was determined.

At 120 Hz, a very low RC constant of 613 μs (when using a graphite rod as a starting material for electrochemical exfoliation) and 616 μs (when using a graphite foil as a starting material for electrochemical exfoliation), respectively,

was obtained.

The relaxation time constant, $\tau_o$, which is taken at an -45° angle, where the real and the imaginary component have equal magnitude, is calculated using the formula below, where $f_o$ is the frequency at an -45° angle:

$$\tau_o = 1/(2\pi f_o)$$

A very low $\tau_o$ value of 253 μs was obtained at 629 Hz ($f_o$ value at -45°).

Accordingly, as demonstrated by the Examples, an electrochemical capacitor having electrodes made of the electrochemically exfoliated graphene of the present invention has a surprisingly low RC time constant at 120 Hz. Other relevant capacitor properties, in particular charging/discharging capability, power and energy densities, and ESR value are also on a very high level. Due to its very low RC time constant in combination with the other beneficial properties, the electrochemical capacitor is very suitable for AC line filtering. Thus, the electrochemically exfoliated graphene of the present invention is not only obtainable by an economically efficient and easy-to-perform method but also enables the preparation of electrochemical capacitors having surprisingly low RC time constants.

**4. Using the electrochemically exfoliated graphene for preparing a lithium ion battery**

A lithium ion battery having an anode comprising silicon, a copper current collector, and an electrochemically exfoliated graphene located in between the silicon-containing anode and the current collector was prepared as follows:

Following the procedure described above, graphene was prepared by electrochemical exfoliation in an aqueous electrolyte containing EMIM-MS (i.e. an aqueous electrolyte in which an ionic liquid is dissolved).

A graphene film was deposited on a copper foil (acting as a current collector) using Langmuir-Blodgett assembly technique.

The working electrode (anode) was prepared by dispersing a nanosized Si powder (average particle size (APS) ≈ 50nm, Alfa Aesar), Conductive black - Super P C65 (Timcal), and poly(acrylic acid) (PAA) (MW = 450.000) in a weight ratio of 63:22:15, in DI water and methanol. The mixture was stirred for 3 h until a homogeneous slurry is obtained. The slurry was then casted onto the graphene-coated copper foil using the doctor blade method (coating thickness of 200 μm), followed by drying overnight (24h) in a vacuum drying chamber at a temperature of 70 °C. A half cell was assembled using the punched-out Si electrodes of 14 mm diameter as the working electrode against a lithium metal as the counter and reference electrode, employing *1M* $LiPF_6$ *in EC: EMC: FEC (3:6:1)* as electrolyte.

As a reference, a graphene-free lithium ion battery was prepared according to the method described above.

For the initial SEI formation, the half cell was cycled at C/10 for 20 cycles, followed by C/5 for 50 cycles and C/2 for 100 cycles between 0.01 and 1.5 V. All measurements were carried out at room temperature (25°C).

In Figure 14, voltage as a function of specific capacity is shown.

The following properties are derivable from Figure 14:

Li-ion battery containing the electrochemically exfoliated graphene:

Discharge capacity ($1^{st}$ cycle): 3853 mAh/g
Charge capacity ($1^{st}$ cycle): 3421 mAh/g

Graphene-free Li-ion battery:

Discharge capacity ($1^{st}$ cycle): 2586 mAh/g
Charge capacity ($1^{st}$ cycle): 2612 mAh/g

As demonstrated by the experimental data, charge and discharge capacity are clearly improved when a layer of electrochemically exfoliated graphene is present (in between the current collector and the anode).

## Claims

1. A process for preparing graphene by electrochemical exfoliation, which comprises:

- providing a first electrode E1 and a second electrode E2, wherein at least the first electrode E1 comprises a carbon starting material having a layered structure;
- bringing at least the first electrode E1 in contact with a liquid electrolyte, wherein the liquid electrolyte comprises a salt which
- is a salt of a sulfonic acid or a salt of a sulphuric acid monoester, and
- is an ionic liquid;
- applying an electric potential between the first electrode E1 and the second electrode E2 so as to exfoliate graphene from the carbon starting material.

**2.** The process according to claim 1, wherein the salt of the sulfonic acid has the following formula (III)

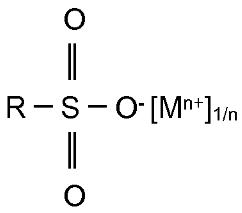

(III)

wherein
R is an organic residue, and
M is a cation, and n is the valency of the cation;
and
the salt of the sulphuric acid monoester has the following formula (IV)

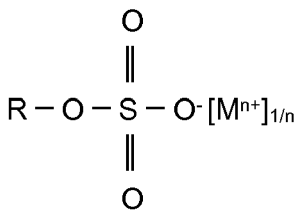

(IV)

wherein
R is an organic residue, and
M is a cation, and n is the valency of the cation.

**3.** A process for preparing graphene by electrochemical exfoliation, which comprises:

- providing a first electrode E1 and a second electrode E2, wherein at least the first electrode E1 comprises a carbon starting material having a layered structure;
- bringing at least the first electrode E1 in contact with a liquid electrolyte, wherein the liquid electrolyte comprises a sulfonic acid of formula (I) or a salt thereof, and/or a sulphuric acid monoester of formula (II) or a salt thereof:

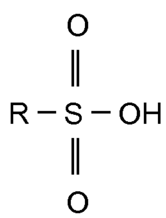

(I)

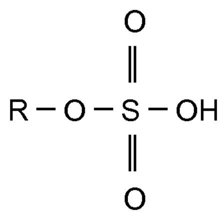

(II)

wherein in each of the formulas (I) and (II)
R is methyl, ethyl, propyl, or butyl;
- applying an electric potential between the first electrode E1 and the second electrode E2 so as to exfoliate graphene from the carbon starting material.

**4.** The process according to claim 3, wherein the salt of the sulfonic acid of formula (I) or the salt of the sulphuric acid monoester of formula (II) is an ionic liquid.

**5.** The process according to one of the preceding claims, wherein the carbon starting material having a layered structure is a graphite, a chemically modified graphite, an intercalated graphite, or a mixture thereof; and/or the liquid electrolyte is an aqueous electrolyte.

**6.** The process according to one of the claims 1-2 and 4-5, wherein the cation of the ionic liquid is a heterocyclic cation, an ammonium cation, or a phosphonium cation, or a mixture thereof.

**7.** The process according to claim 6, wherein the heterocyclic cation is a nitrogen-containing heterocyclic cation, which is preferably selected from an imidazolium cation, a pyridinium cation, a pyrrolidinium cation, a pyrazolium cation, a pyridazinium cation, a pyrimidinium cation, a pyrazinium cation, an oxazolium cation, a triazolium cation, a thiazolium cation, a piperidinium cation, a quinolium cation, an isoquinolium cation, a benzimidazolium cation, or any mixture thereof.

**8.** The process according to one of the preceding claims, wherein the electric potential applied between the first electrode E1 and the second electrode E2 is in the range of from 0.01 V to 200 V.

**9.** An electrochemically exfoliated graphene, obtainable by the process according to one of the claims 1 to 8.

**10.** The electrochemically exfoliated graphene according to claim 9, which is in the form of flakes, and at least 50% of the graphene flakes are made of at most three graphene layers; and/or at least 60% of the flakes have a size of at least 5 $\mu$m.

**11.** The electrochemically exfoliated graphene according to claim 9 or 10, having a carbon to oxygen atomic ratio of at least 8, as determined by X-ray photoelectron spectroscopy; and/or having an intensity ratio of the D peak to the G peak in the Raman spectrum of less than 1.0.

**12.** A process for preparing a graphene dispersion, which comprises:

- preparing an electrochemically exfoliated graphene by the process according to one of the claims 1 to 8, and
- dispersing the electrochemically exfoliated graphene in a liquid dispersant medium.

**13.** A graphene dispersion, obtainable by the process according to claim 12.

**14.** Use of the electrochemically exfoliated graphene according to one of the claims 9 to 11 or the graphene dispersion according to claim 13 for manufacturing a device.

**15.** Use according to claim 14, wherein the device is an electronic device, an optoelectronic device, an energy-storing device or an energy-transforming device; and is preferably selected from an electrochemical capacitor, an AC line filter, a lithium ion battery, or a device containing an electrocatalyst.

**16.** A device, comprising the electrochemically exfoliated graphene according to one of the claims 9 to 11.

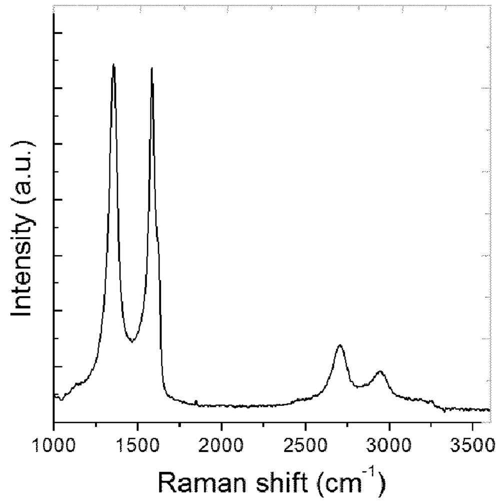


Figure 1

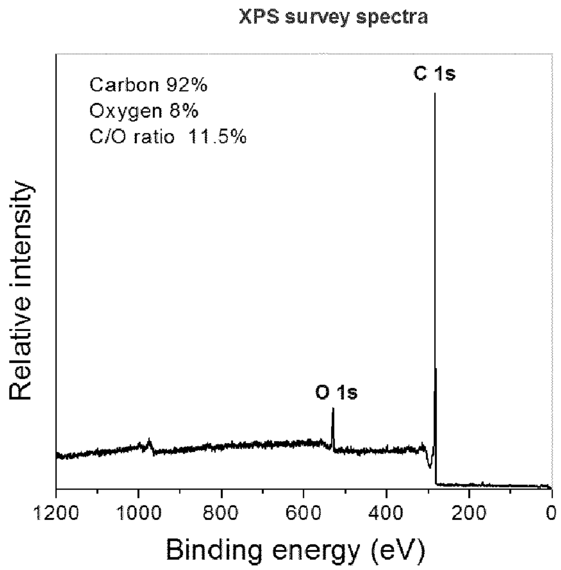


Figure 2

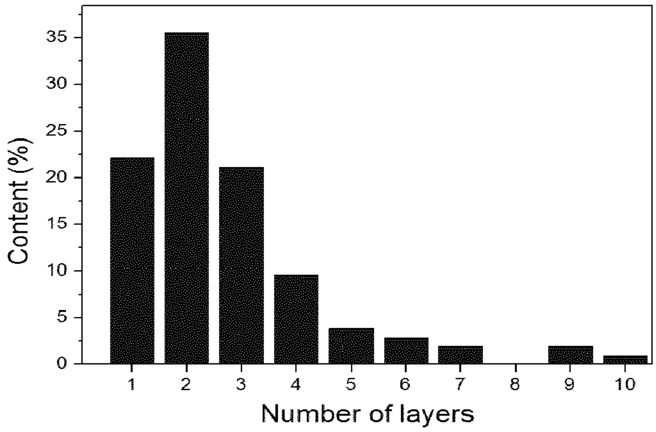


Figure 3

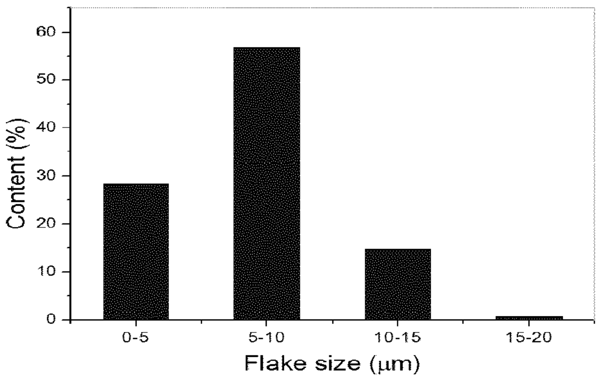


Figure 4

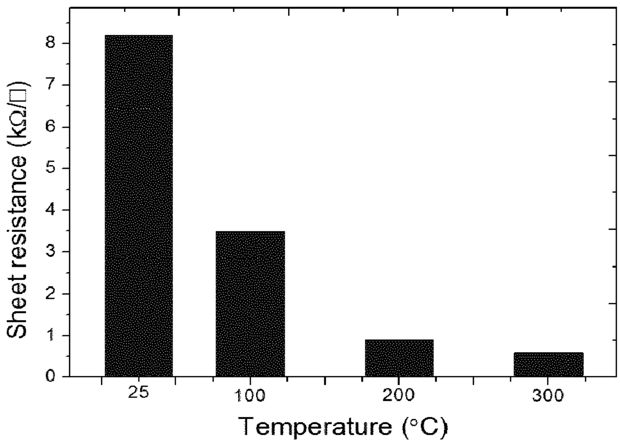


Figure 5

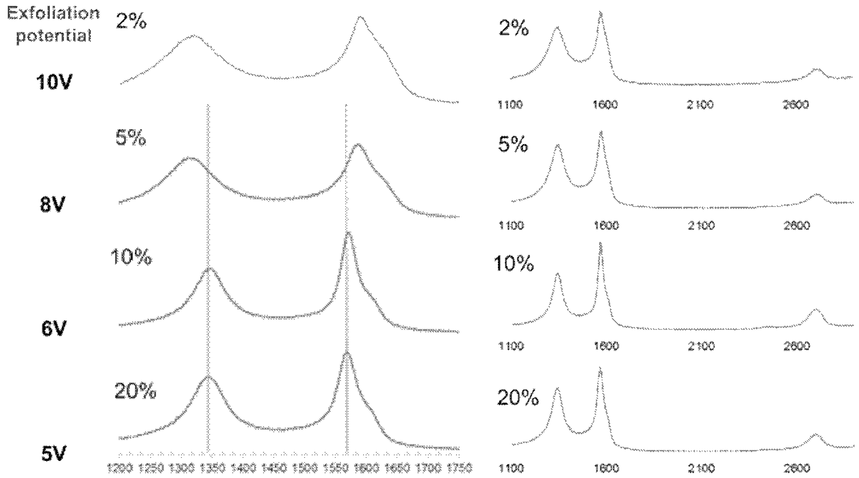


Figure 6

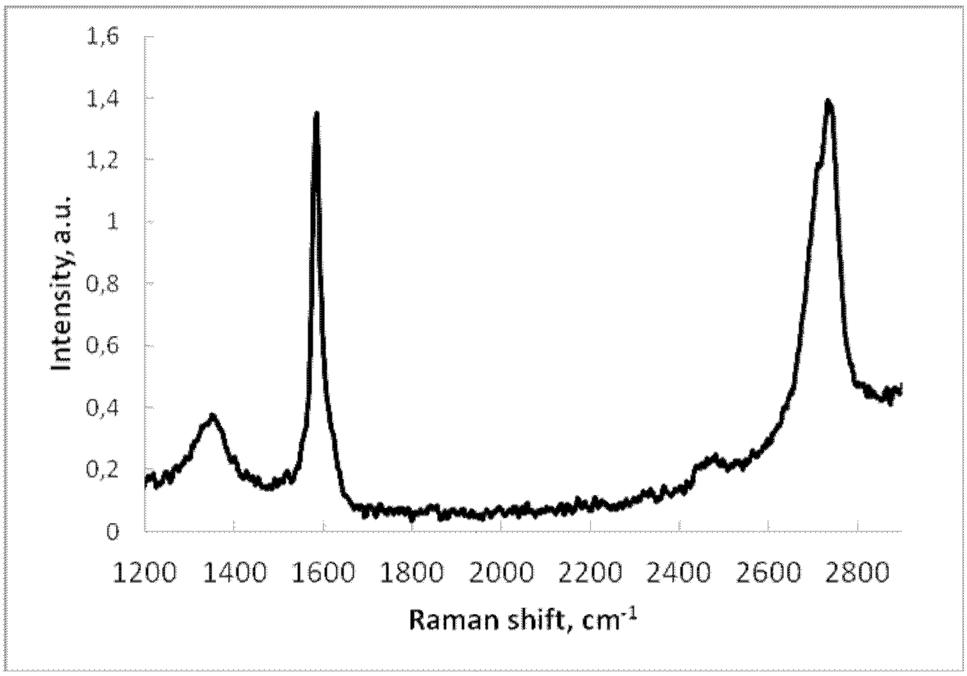


Figure 7

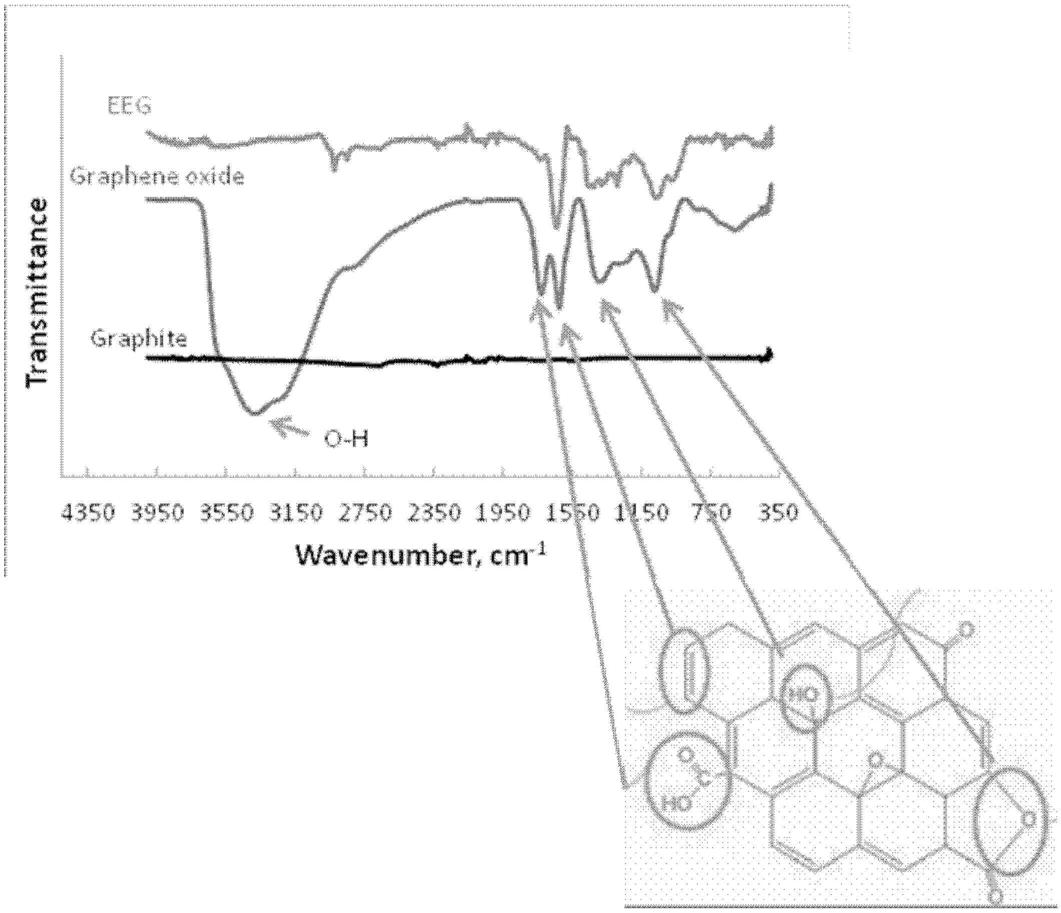
EEG
Graphene oxide
Graphite
Transmittance
O-H
4350 3950 3550 3150 2750 2350 1950 1550 1150 750 350
Wavenumber, cm-1
HO
HO

Figure 8

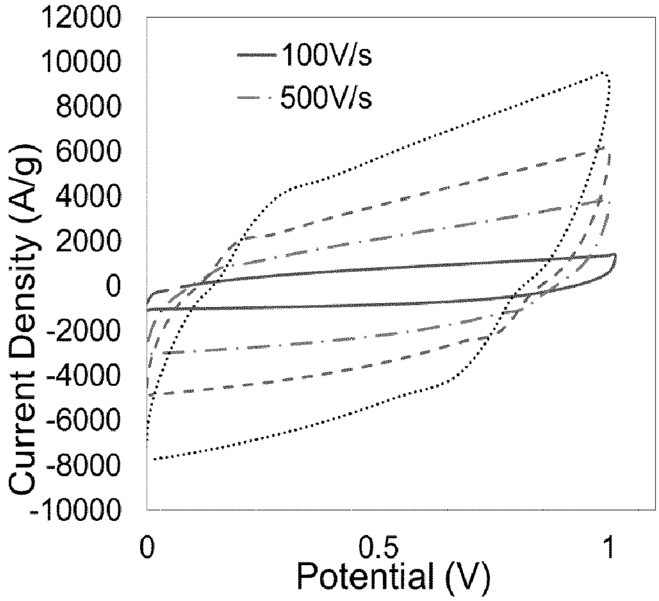


Figure 9

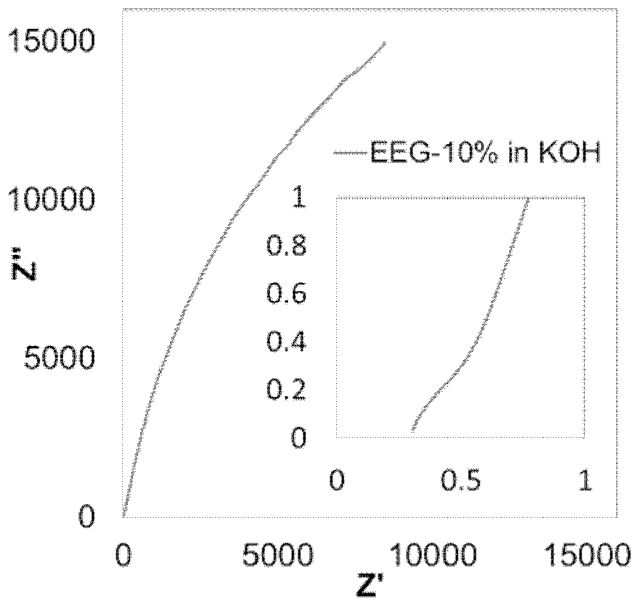


Figure 10

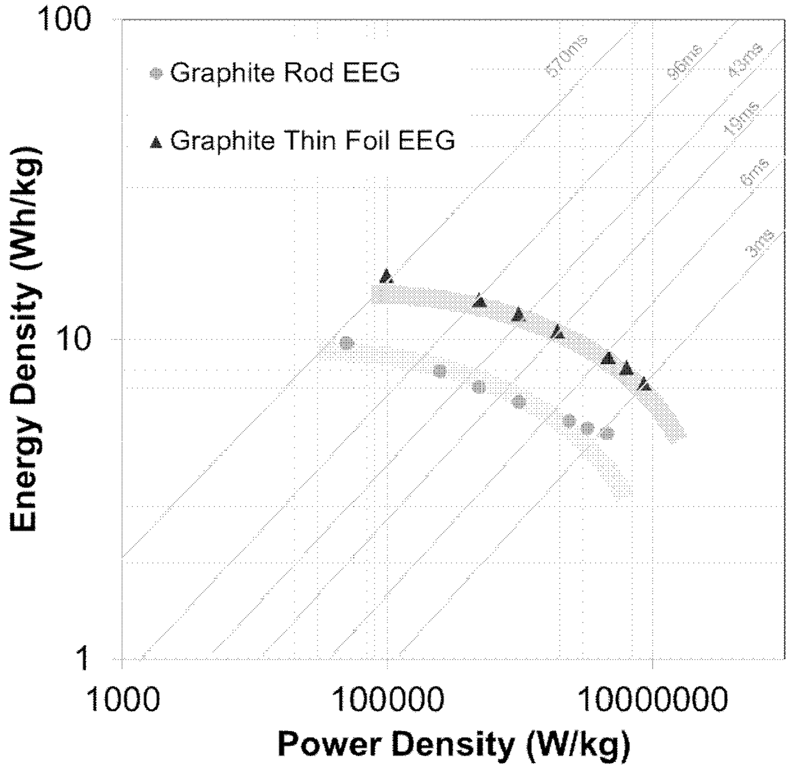


Figure 11

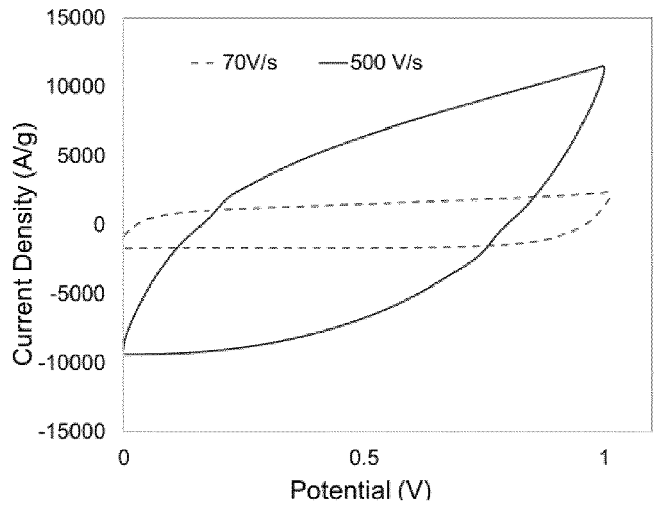


Figure 12

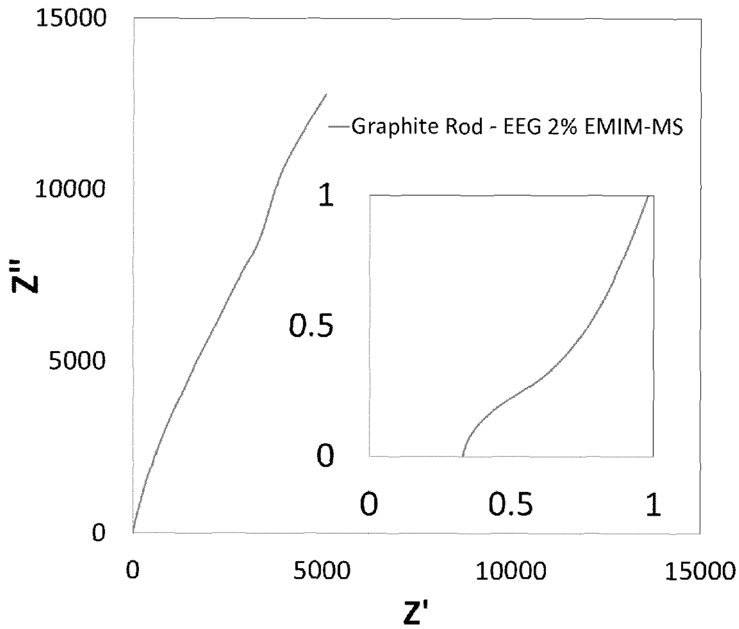


Figure 13

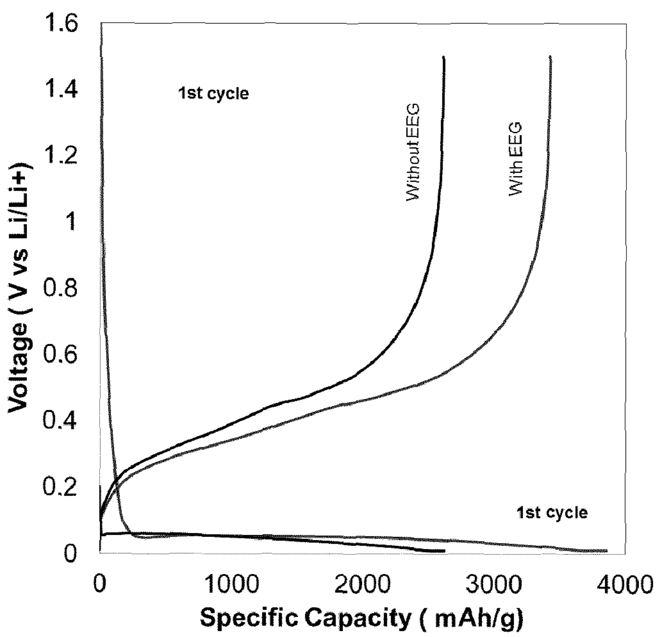


Figure 14

Europäisches Patentamt
European Patent Office
Office européen des brevets

# EUROPEAN SEARCH REPORT

Application Number
EP 14 16 5214

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 488 825 A (MORGANITE ELECT CARBON [GB]) 12 September 2012 (2012-09-12) * claims 1,10-13; table 2 * | 1,2,5,8 | INV. C25B1/00 |
| X | WANG G ET AL: "Highly efficient and large-scale synthesis of graphene by electrolytic exfoliation", CARBON, ELSEVIER, OXFORD, GB, vol. 47, no. 14, 1 November 2009 (2009-11-01), pages 3242-3246, XP026575033, ISSN: 0008-6223, DOI: 10.1016/J.CARBON.2009.07.040 [retrieved on 2009-07-19] * the whole document * | 1,2,5, 8-16 | |
| X | US 2013/299359 A1 (LING YONG-CHIEN [TW] ET AL) 14 November 2013 (2013-11-14) * paragraph [0008] - paragraph [0015] * * paragraph [0042] * | 1,2,5-13 | |
| | | | TECHNICAL FIELDS SEARCHED (IPC) |
| | | | C25B |

~~The present search report has been drawn up for all claims~~

1

| Place of search | Date of completion of the search | Examiner |
|---|---|---|
| Munich | 23 October 2014 | Hammerstein, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

Application Number
EP 14 16 5214

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1, 2(completely); 5-16(partially)

☐ The present supplementary European search report has been drawn up for those parts of the European patent application which relate to the invention first mentioned in the claims (Rule 164 (1) EPC).

Europäisches Patentamt
European Patent Office
Office européen des brevets

# LACK OF UNITY OF INVENTION SHEET B

Application Number
EP 14 16 5214

The Search Division considers that the present European patent application does not comply with the requirements of unity of invention and relates to several inventions or groups of inventions, namely:

1. claims: 1, 2(completely); 5-16(partially)

Independent claim 1 is directed towards a process for preparing graphene by electrochemical exfoliation, which comprises:
- providing a first electrode E1 and a second electrode E2, wherein at least the first electrode E1 comprises a carbon starting material having a layered structure;
- bringing at least the first electrode E1 in contact with a liquid electrolyte, wherein the liquid electrolyte comprises a salt which
- is a salt of a sulfonic acid or a salt of a sulphuric acid monoester, and
- is an ionic liquid;
- applying an electric potential between the first electrode E1 and the second electrode E2 so as to exfoliate graphene from the carbon starting material.

---

2. claims: 3, 4(completely); 5-16(partially)

Independent claim 3 is directed towards a process for preparing graphene by electrochemical exfoliation, which comprises:
- providing a first electrode E1 and a second electrode E2, wherein at least the first electrode E1 comprises a carbon starting material having a layered structure;
- bringing at least the first electrode E1 in contact with a liquid electrolyte, wherein the liquid electrolyte comprises a sulfonic acid of formula (I) or a salt thereof, and/or a sulphuric acid monoester of formula (II) or a salt thereof wherein in each of the formulas (I) and (II)
R is methyl, ethyl, propyl, or butyl;
- applying an electric potential between the first electrode E1 and the second electrode E2 so as to exfoliate graphene from the carbon starting material.

---

## ANNEX TO THE EUROPEAN SEARCH REPORT ON EUROPEAN PATENT APPLICATION NO. EP 14 16 5214

This annex lists the patent family members relating to the patent documents cited in the above-mentioned European search report. The members are as contained in the European Patent Office EDP file on
The European Patent Office is in no way liable for these particulars which are merely given for the purpose of information.

23-10-2014

| Patent document cited in search report | Publication date | Patent family member(s) | Publication date |
|---|---|---|---|
| GB 2488825 A | 12-09-2012 | GB 2488825 A | 12-09-2012 |
| | | GB 2503838 A | 08-01-2014 |
| | | WO 2012120291 A1 | 13-09-2012 |
| US 2013299359 A1 | 14-11-2013 | TW 201345835 A | 16-11-2013 |
| | | US 2013299359 A1 | 14-11-2013 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20130001089 A


### Non-patent literature cited in the description


- *Science,* 2004, vol. 306, 666-669
- *Nat Nanotechnol,* 2008, vol. 3, 270-274
- *NatNanotechnol,* 2008, vol. 3, 563-568
- *J Am Chem Soc,* 2011, vol. 133, 8888-8891
- *Nat Nanotechnol,* 2011, vol. 6, 439-445
- *Adv Funct Mater,* 2008, vol. 18, 1518-1525